# EUROPÄISCHE PATENTSCHRIFT

(11) **EP 2 002 235 B1**
(45) Veröffentlichungstag und Bekanntmachung des Hinweises auf die Patenterteilung: **14.12.2011**
(21) Anmeldenummer: 07727545.1
(22) Anmeldetag: 30.03.2007
(51) Int. Cl.: G01M 17/02

(54) **VORRICHTUNG UND VERFAHREN ZUM PRÜFEN EINES REIFENS, INSBESONDERE MITTELS EINES INTERFEROMETRISCHEN MESSVERFAHRENS**
DEVICE AND METHOD FOR CHECKING A TYRE IN PARTICULAR BY MEANS OF AN INTERFEROMETRIC MEASURING METHOD
DISPOSITIF ET PROCEDE DE CONTROLE D'UN PNEUMATIQUE, EN PARTICULIER AU MOYEN D'UNE MESURE INTERFEROMETRIQUE

(30) Priorität: 31.03.2006 DE 102006015123
(43) Veröffentlichungstag der Anmeldung: 17.12.2008
(73) Patentinhaber: Mähner, Bernhard, 82205 Gilching (DE); Dengler, Stefan, 75365 Calw-Stammheim (DE)
(72) Erfinder: Mähner, Bernhard, 82205 Gilching (DE); Dengler, Stefan, 75365 Calw-Stammheim (DE)
(74) Vertreter: Schober, Christoph D.
(86) Internationale Anmeldenummer: PCT/EP2007/053073
(87) Internationale Veröffentlichungsnummer: WO 2007/113231

(56) Entgegenhaltungen:
- EP-A- 1 473 539
- EP-A- 1 500 917
- DE-A1- 19 944 314

## Beschreibung

Die Erfindung betrifft eine Vorrichtung zum Prüfen eines Reifens, insbesondere mittels eines interferometrischen Messverfahrens. Die Vorrichtung ist mit einem ersten Messkopf und einem zweiten Messkopf versehen, durch die der Reifen zum Erzeugen eines Messergebnisses abgetastet werden kann. Die Vorrichtung ist ferner mit einem Positionierungsmittel versehen, durch das der erste Messkopf und der zweite Messkopf zwischen einer außerhalb des Reifens befindlichen Parkposition und einer innerhalb des Reifens befindlichen Beobachtungsposition bewegt werden kann. Die Erfindung bezieht sich ferner auf ein Verfahren zum Prüfen eines Reifens, bei dem eine solche Vorrichtung Anwendung finden kann.

Reifen werden zur Qualitätskontrolle und zur Reduzierung von Sicherheitsrisiken einer Werkstoffprüfung unterzogen, die es ermöglicht, fehlerhafte Stellen, so genannte Fehlstellen, zu erkennen. Vor allem dann, wenn es sich um benutzte Reifen handelt, die runderneuert werden sollen, wird in der Regel eine zerstörungsfreie Werkstoffprüfung angewendet, die eine vergleichsweise schnelle Reihenuntersuchung gewährleistet. Häufig anzutreffen in der industriellen Praxis sind optische Messverfahren, wie zum Beispiel die Holographie oder die auch als Speckle-Pattern-Shearing-Interferometrie bezeichnete Shearographie. Die Shearographie ist ein relatives interferometrisches Messverfahren, das ein Ergebnisbild liefert, welches den Unterschied zwischen zwei zeitlich versetzten Zuständen des Prüflings darstellt. Um das auf Grund der zunehmenden Verbreitung von elektronischen Bildsensoren, wie zum Beispiel CCD- oder CMOS-Sensoren, heutzutage in der Regel digitale Ergebnisbild zu erzeugen, ist es demzufolge erforderlich, den Zustand des Prüflings zwischen zwei Messungen durch Einwirkung einer mechanischen, thermischen oder pneumatischen Kraft zu verändern. Vorrichtungen zum Prüfen von Reifen können aus diesem Grund eine Druckkammer aufweisen, die entweder evakuiert oder mit Druck beaufschlagt wird, so dass sich der in der Druckkammer befindende Reifen infolge der Druckänderung verformt und damit von einem ersten Referenzzustand in einen zweiten Messzustand übergeht.

Im Unterschied zu der Holographie ermittelt die Shearographie nicht die Verformung an der Oberfläche eines Prüflings, sondern misst den Gradienten der Verformung. Dies ist darauf zurückzuführen, dass für die Shearographie ein so genanntes Shearingelement Anwendung findet, bei dem es sich um eine eine Bildverdopplung erzeugende Shearoptik, wie zum Beispiel ein optischer Keil, ein optisches Biprisma oder ein Michelson-Interferometer, handelt. Auf Grund des Shearingelements entstehen zwei geringfügig räumlich versetzte Bilder von dem Prüfling, die überlagert werden, um auf Grund der sich auf diese Weise ergebenden Interferenz ein Interferogramm zu erzeugen. Das den Gradienten der Verformung kennzeichnende Shearogramm wird durch Subtraktion der Intensitäten der im Referenzzustand und im Messzustand gewonnenen Interferogramme erzeugt. Das Shearogramm gibt zu erkennen, ob sich die Lage eines Punktes zu einem benachbarten Punkt auf Grund der Verformung des Prüflings geändert hat. Falls ja, dann führt dieser Wegunterschied zu einer lokalen Veränderung der Intensitätsverteilung, die Auskunft über eine Fehlstelle gibt. Interferometrische Messverfahren, die auf dieser Speckle-Interferomertrie beruhen, werden in der DE 42 31 578 A1 und EP 1 014 036 B1 beschrieben.

Die zum Prüfen eines Reifens mittels eines interferometrischen Messverfahrens eingesetzten Vorrichtungen sind in der Regel mit wenigstens einem Messkopf versehen, der eine Beleuchtungseinheit und eine Bildaufnahmeeinheit aufweist. Die Beleuchtungseinheit wird häufig durch einen kohärentes Licht emittierenden Laser oder Laserdioden gebildet. Die Bildaufnahmeeinheit ist üblicherweise eine Kamera, die mit einem lichtempfindlichen Halbleitersensor, zum Beispiel einem CCD- oder CMOS-Sensor, versehen ist. Um ein aussagekräftiges Messergebnis zu erhalten, ist es erforderlich, das Gesichtsfeld der Kamera und den zu prüfenden Abschnitt des Reifens auf einander abzustimmen. Gewöhnlich erfolgt eine solche Abstimmung dadurch, dass der Messkopf in einer Beobachtungsposition positioniert und in einer Beobachtungsrichtung ausgerichtet wird, die sicherstellen, dass einerseits der gewählte Messabschnitt des Reifens vollständig im Gesichtsfeld der Kamera liegt und andererseits aufeinander folgende Messabschnitte sich ausreichend überlappen, um eine lückenlose Prüfung zu ermöglichen. Die Beobachtungsposition und die Beobachtungsrichtung des Messkopfs hängen von den Abmessungen des Reifens ab. Demzufolge sind aus der EP 1 284 409 A1 und DE 103 33 802 A1 Vorrichtungen bekannt, die es ermöglichen, den Reifen optisch, beispielsweise mittels so genannter Lichtschnitte, zu vermessen, um in Abhängigkeit von den auf diese Weise gewonnenen Daten den Messkopf zu positionieren und auszurichten.

Die EP 1 500 917 A2 beschreibt ein Verfahren und eine Vorrichtung zum Prüfen von Reifen, bei denen ein Messkopf in Abhängigkeit von sensorisch erfassten Geometriedaten positioniert wird. Die Vorrichtung umfasst einen vertikal ausgerichteten Triangulationssensor H und einen horizontal ausgerichteten Triangulationssensor V. Der vertikal ausgerichtete Triangulationssensor H nimmt ein horizontales Profil auf, wohingegen der horizontal ausgerichtete Triangualtionssenor V ein vertikales Profil aufnimmt. Die durch die Triangulationssensoren H, V gewonnenen Geometriedaten des Reifens, bei denen es sich um den Außendurchmesser, den Innendurchmesser, die Reifenbreite, den Laufflächen-Innendurchmesser, die Maulweite oder die Seitenwandkontur handeln kann, werden berücksichtigt, um den Messkopf zur Prüfung des Reifens zu positionieren.

Weiterhin beschreibt die EP 1 473 539 A1 ein Verfahren und eine Vorrichtung zur Formmessung und/oder Verformungsmessung eines Objekts, bei dem es sich um einen Reifen handeln kann. Das Verfahren sieht vor, das Objekt mit Laserlicht zu beleuchten und das von dem Objekt reflektierte Licht von einer Kamera aufzunehmen. Eine erste Aufnahme wird mit einer ersten Einstellung der Kamera gemacht, die an einen ersten Bildbereich angepasst ist, und eine zweite Aufnahme wird mit einer zweiten Einstellung der Kamera gemacht, die an einen zweiten Bildbereich angepasst ist. Anschließend werden die beiden Aufnahmen kombiniert. Die Vorrichtung kann zwei Messköpfe aufweisen, die jeweils eine Laserlichtquelle und eine Kamera, die einen CCD-Sensor und eine Aufnahmeoptik umfasst, aufweisen. Durch die Laserlichtquelle wird ein Teil der Seitenfläche des Reifens mit Laserlicht bestrahlt. Das von der Seitenfläche des Reifens reflektierte Licht wird von dem CCD-Sensor aufgenommen.

Ein Reifenprüfgerät, bei dem ein zu prüfender Reifen ohne Felge und Radscheibe in einer liegenden Position in einer Druckkammer angeordnet wird, offenbart die DE 199 44 314 A1. Das Reifenprüfgerät weist mehrere Messköpfe auf, die sich in einem vorgegebenen Abstand von der inneren Umfangsfläche, der inneren Seitenfläche oder der äußeren Seitenfläche des Reifens positionieren lassen, um den Unterbau des Reifens, das heißt die Karkasse, einen häufig zwischen der Karkasse und der Lauffläche angeordneten Gürtel sowie die Seitenwand des Reifens zu prüfen. Die Messköpfe weisen jeweils eine Beleuchtungseinheit und eine Bildaufnahmeeinheit auf und sind in einem Winkel zueinander angeordnet, so dass unterschiedliche Abschnitte des Reifens gleichzeitig geprüft werden können, um eine vergleichsweise schnelle Prüfung zu erreichen.

Die Messköpfe sind mit einem Positionierungsmittel verbunden, das es ermöglicht, die Messköpfe von einer sich außerhalb des Reifens befindenden und somit einen Wechsel der zu prüfenden Reifen gewährleistenden Parkposition in eine sich innerhalb des Reifens befindende Beobachtungsposition zu bewegen, um die innere Umfangsfläche oder die innere Seitenwand des Reifens zu prüfen. Zu diesem Zweck weist das Positionierungsmittel einen in der axialen Richtung des Reifens verstellbaren Arm auf, an dem die Messköpfe angeordnet sind. Um die Messköpfe in der erforderlichen Beobachtungsposition positionieren und in der gewünschten Beobachtungsrichtung ausrichten zu können, sind die Messköpfe in radialer Richtung des Reifens verstellbar und um eine Schwenkachse drehbar an dem Arm angeordnet.

Das bekannte Reifenprüfgerät ist mit dem Nachteil verbunden, dass die Gesamtheit der Messköpfe verhältnismäßig voluminös ist und sich demzufolge das Prüfgerät nur zum Prüfen von Reifen eignet, die einen Felgendurchmesser haben, der ausreichend groß ist, um die Messköpfe in das Innere des Reifens einführen zu können. Ein weiterer Nachteil besteht darin, dass die kürzere Prüfzeit, die sich durch das Vorhandensein von mehreren Messköpfen erreichen lässt, nicht in jedem Anwendungsfall benötigt wird und aufgrund des zusätzlichen Aufwands, der erforderlich ist, um die Vielzahl an von den Messköpfen gewonnenen Messergebnissen auszuwerten, auch nicht stets wünschenswert ist. Außerdem hat es sich bei dem bekannten Reifenprüfgerät als nachteilig erwiesen, dass die Störung oder der Ausfall eines der Messköpfe die anderen Messköpfe in Mitleidenschaft zieht und einen unerwünschten Stillstand des Reifenprüfgeräts hervorruft, wenn sämtliche Messköpfe zum Austausch oder zur Reparatur des gestörten oder ausgefallenen Messkopfs in die Parkposition bewegt werden müssen.

Der Erfindung liegt die Aufgabe zugrunde, eine Vorrichtung und ein Verfahren zum Prüfen eines Reifens zu schaffen, durch die sich auch Reifen mit einem vergleichsweise geringen Felgendurchmesser prüfen lassen.

Diese Aufgabe wird durch eine Vorrichtung gemäß Anspruch 1 und ein Verfahren gemäß Anspruch 11 gelöst. Bevorzugte Ausgestaltungen der Vorrichtung und des Verfahrens werden in den Ansprüchen 2 bis 10 und 12 bis 14 definiert.

Die erfindungsgemäße Vorrichtung zum Prüfen eines Reifens ist mit wenigstens einem ersten Messkopf und einem zweiten Messkopf versehen, durch die der Reifen zum Erzeugen eines Messergebnisses abtastbar ist. Die Messköpfe haben zum Beispiel eine Ausgestaltung wie sie in der EP 1 014 036 B1 beschrieben ist, um den Reifen mittels eines interferometrischen Messverfahrens zu prüfen. Die erfindungsgemäße Vorrichtung ist ferner mit einem Positionierungsmittel versehen, durch das die Messköpfe zwischen einer außerhalb des Reifens befindlichen Parkposition und einer innerhalb des Reifens befindlichen Beobachtungsposition bewegt werden können. Der erste Messkopf und der zweite Messkopf können dabei durch das Positionierungsmittel unabhängig voneinander in der Parkposition und/oder der Beobachtungsposition positioniert werden.

Das erfindungsgemäße Verfahren zum Prüfen eines Reifens weist folgende Verfahrensschritte auf:
a) ein zu prüfender Reifen wird in einer Prüfvorrichtung angeordnet, die eine Druckkammer, ein Positionierungsmittel sowie wenigstens einen ersten Messkopf und einen zweiten Messkopf aufweist;
b) der Reifen wird in der Druckkammer einem vorgegebenen Druck ausgesetzt;
c) der erste Messkopf wird durch das Positionierungsmittel von einer außerhalb des Reifens befindlichen Parkposition in eine innerhalb des Reifens befindliche Beobachtungsposition bewegt;
d) in Abhängigkeit von der Dimension des Reifens wird der zweite Messkopf durch das Positionierungsmittel unabhängig von dem ersten Messkopf von einer außerhalb des Reifens befindlichen Parkposition in eine innerhalb des Reifens befindliche Beobachtungsposition bewegt und
e) der Reifen wird entweder von dem ersten Messkopf oder simultan von dem ersten Messkopf und dem zweiten Messkopf abgetastet.

Die Erfindung beruht auf der Erkenntnis, dass eine Ausgestaltung des Positionierungsmittels, die es gestattet, den ersten Messkopf und den zweiten Messkopf unabhängig voneinander in eine innerhalb des Reifens befindliche Beobachtungsposition zu bewegen, die Möglichkeit eröffnet, wahlweise nur einen oder beide Messköpfe im Inneren des Reifens zu positionieren. Hat der zu prüfende Reifen einen Felgendurchmesser, der vergleichsweise gering ist, wie es häufig bei Flugzeugreifen anzutreffen ist, dann wird zweckmäßigerweise nur ein Messkopf in der innerhalb des Reifens befindlichen Beobachtungsposition positioniert. Hat der zu prüfende Reifen hingegen einen Felgendurchmesser, der ausreichend groß ist, um sowohl den ersten Messkopf als auch den zweiten Messkopf in das Innere des Reifens einzuführen, so werden zweckmäßigerweise beide Messköpfe im Inneren des Reifens positioniert, um eine schnelle Prüfung der inneren Umfangsfläche und/oder der inneren Seitenwand des Reifens zu erreichen.

Die Erfindung ist nicht auf zwei Messköpfe beschränkt. Vielmehr können auch drei, vier oder noch mehr Messköpfe vorgesehen sein, die sich unabhängig voneinander in der Parkposition und/oder der Beobachtungsposition positionieren lassen. Vor allem dann, wenn eine größere Anzahl an Messköpfen vorgesehen ist, kommt in besonderem Maße zu tragen, dass sich die Messköpfe auf Grund der unabhängigen Verstellbarkeit nacheinander in das Innere des Reifens einführen und dort in der gewünschten Beobachtungsposition positionieren und ausrichten lassen. Im Vergleich zu dem aus der DE 199 44 314 A1 bekannten Prüfgerät, bei dem sich die Messköpfe nicht nacheinander, sondern nur gemeinsam in das Innere des Reifens einführen lassen, erlaubt es die erfindungsgemäße Vorrichtung, bei gleichem Felgendurchmesser mehr Messköpfe in einer innerhalb des Reifens befindlichen Beobachtungsposition zu positionieren. Denn die erfindungsgemäße Vorrichtung gestattet es, den durch die Reifenbreite und die Reifenhöhe gekennzeichneten Hohlraum des Reifens auszunutzen, um die Messköpfe im Inneren des Reifens zu positionieren.

Bevorzugt ist das Positionierungsmittel so ausgestaltet, dass sich die Messköpfe sowohl in der Parkposition als auch in der Beobachtungsposition unabhängig voneinander positionieren lassen. In diesem Fall ergibt sich eine redundante Ausgestaltung, die zu einer hohen Ausfallsicherheit beiträgt. Denn bei Ausfall eines Messkopfs kann dieser in die Parkposition bewegt und der Reifen von dem anderen Messkopf oder, falls mehr als zwei Messköpfe vorgesehen sind, von den anderen Messköpfen geprüft werden. Je nach Anwendungsfall kann es allerdings ausreichend sein, wenn die Messköpfe unabhängig voneinander nur in der Beobachtungsposition positionierbar sind und von einer zwischen der Beobachtungsposition und der Parkposition liegenden Zwischenposition aus gemeinsam in die Parkposition bewegt werden.

Der erste Messkopf und der zweite Messkopf sind durch das Positionierungsmittel in einer axialen Richtung bewegbar. Das Positionierungsmittel weist zu diesem Zweck eine erste Verstelleinheit, durch die der erste Messkopf in der axialen Richtung bewegbar ist, und eine zweite Verstelleinheit, durch die der zweite Messkopf in der axialen Richtung bewegbar ist, auf. Die beispielsweise als Linearführung oder Linearmotor ausgestalteten Verstelleinheiten können unabhängig voneinander gesteuert werden, um die Messköpfe unabhängig voneinander in der Parkposition oder der Beobachtungsposition zu positionieren.

Der erste Messkopf und der zweite Messkopf sind durch das Positionierungsmittel ferner in einer radialen Richtung bewegbar, um sicherzustellen, dass die Messköpfe in der erforderlichen Beobachtungsposition positioniert werden können. Das Positionierungsmittel weist zu diesem Zweck eine dritte Verstelleinheit, durch die der erste Messkopf in der radialen Richtung bewegbar ist, und eine vierte Verstelleinheit, durch die der zweite Messkopf in der radialen Richtung bewegbar ist, auf. Die beispielsweise ebenfalls als Linearführung oder Linearmotor ausgestalteten Verstelleinheiten sind unabhängig voneinander steuerbar, um ein freies Bewegen der Messköpfe in der radialen Richtung zu gewährleisten.

Bevorzugt ist die erste Verstelleinheit an die dritte Verstelleinheit gekoppelt, wohingegen vorzugsweise die zweite Verstelleinheit an die vierte Verstelleinheit gekoppelt ist. Eine solche Ausgestaltung bietet sich insbesondere dann an, wenn die Verstelleinheiten als Linearführung oder Linearmotor ausgestaltet sind.

Eine praxisgerechte Prüfung des Reifens ergibt sich dann, wenn der Reifen in einer liegenden Position geprüft wird. In diesem Fall verläuft die axiale Richtung vertikal, wohingegen die radiale Richtung horizontal verläuft. Je nach Anwendungsfall kann es allerdings zweckmäßig sein, den Reifen in einer aufrechten Position zu prüfen, so dass die axiale Richtung horizontal verläuft. Eine solche Ausgestaltung kommt vor allem dann zum Tragen, wenn der zu prüfende Reifen vergleichsweise schwer ist und damit ein Wenden des Reifens mit einem vergleichsweise hohen Aufwand verbunden ist. Bevorzugt sind der erste Messkopf und/oder der zweite Messkopf relativ zu dem Reifen um eine sich in axialer Richtung erstreckende Rotationsachse oder Rollachse drehbar, so dass der Reifen in Umfangsrichtung vollständig durch die Messköpfe abgetastet werden kann. Um die Messköpfe in der erforderlichen Beobachtungsrichtung auszurichten, ist es ferner von Vorteil, wenn der erste Messkopf und/oder der zweite Messkopf um eine vorzugsweise orthogonal zu der Rotationsachse verlaufende Schwenkachse drehbar sind.

Die erfindungsgemäße Vorrichtung weist eine Druckkammer auf, in welcher der zu prüfende Reifen einem vorgegebenen Druck ausgesetzt werden kann. Eine solche Ausgestaltung bietet sich dann an, wenn der Reifen mittels eines interferometrischen Messverfahrens geprüft wird, so dass sich durch eine Änderung des Drucks in der Druckkammer eine für ein solches Messverfahren erforderliche Verformung des Reifens hervorrufen lässt. Die erfindungsgemäße Vorrichtung ist zweckmäßigerweise mit einem Untergestellt versehen, auf dem die Druckkammer angeordnet ist und das den Reifen während der Prüfung abstützt. In diesem Fall hat es sich als besonders vorteilhaft erwiesen, wenn der Reifen um die Rotationsachse drehbar auf dem Untergestell lagerbar ist. Denn auf diese Weise ist es entbehrlich, das die Messköpfe verstellende Positionierungsmittel drehbar auszugestalten, so dass sich trotz der freien Verstellbarkeit der Messköpfe eine vergleichsweise einfache Bauweise des Positionierungsmittels erreichen lässt.

Um ein interferometrisches Messverfahren durchzuführen, umfassen der erste Messkopf und/oder der zweite Messkopf vorteilhafterweise eine Beleuchtungseinheit, durch welche der Reifen beleuchtet wird, ein Shearingelement, durch das die von dem Reifen rückgestreuten Lichtbündel zur Interferenz gebracht werden, und einen elektronischen Bildsensor, der im Strahlengang des Shearingelements angeordnet ist und die interferierenden Lichtbündel aufnimmt. In Abhängigkeit vom jeweiligen Anwendungsfall kann die zum Beispiel durch Laserdioden gebildete Beleuchtungseinheit entweder integraler Bestandteil des Messkopfs oder von diesem separat ausgebildet sein.

In einer bevorzugten Ausgestaltung des erfindungsgemäßen Verfahrens wird in Abhängigkeit von der Dimension des Reifens, insbesondere dem Felgendurchmesser, der Reifenbreite und der Reifenhöhe, und/oder der erforderlichen Beobachtungsposition, die Anzahl der innerhalb des Reifens in einer Beobachtungsposition zu positionierenden Messköpfe von einer das Positionierungsmittel steuernden Steuereinrichtung automatisch ausgewählt, um eine benutzerfreundliche Prüfung des Reifens sicherzustellen. Die Dimension des Reifens ist zweckmäßigerweise in einem Speicher der Steuereinrichtung abgelegt. Die Dimension des Reifens kann in reifenspezifischen Prüfprogrammen, die in den Speicher der Steuereinrichtung geladen werden, hinterlegt sein, oder vor der Prüfung des Reifens messtechnisch erfasst werden, zum Beispiel mittels so genannter Lichtschnitte, wie es aus der EP 1 284 409 A1 bekannt ist.

Bevorzugt wird der Reifen um eine sich in axialer Richtung erstreckende Rotationsachse gedreht, um den Reifen in Umfangsrichtung vollständig abzutasten.

Bei dem erfindungsgemäßen Verfahren wird der Reifen in einer Druckkammer angeordnet und einem vorgegebenen Druck ausgesetzt, um ein Messverfahren durchzuführen, bei dem die Messköpfe eine sich auf Grund einer Änderung des Druckes in der Druckkammer ergebende Verformung des Reifens interferometrisch erfassen.

Einzelheiten und weitere Vorteile der Erfindung ergeben sich aus der nachfolgenden Beschreibung eines bevorzugten Ausführungsbeispiels. In den das

Ausführungsbeispiel lediglich schematisch darstellenden Zeichnungen veranschaulichen im Einzelnen:
- Fig. 1: eine Seitenansicht einer Vorrichtung zum Prüfen eines Reifens, der einen vergleichsweise großen Felgendurchmesser hat;
- Fig. 2: eine Draufsicht auf die Vorrichtung gemäß Fig. 1;
- Fig. 3: eine Seitenansicht gemäß Fig. 1, bei welcher der zu prüfende Reifen einen vergleichsweise geringen Felgendurchmesser hat, und
- Fig. 4: eine Draufsicht auf die Vorrichtung gemäß Fig. 3.

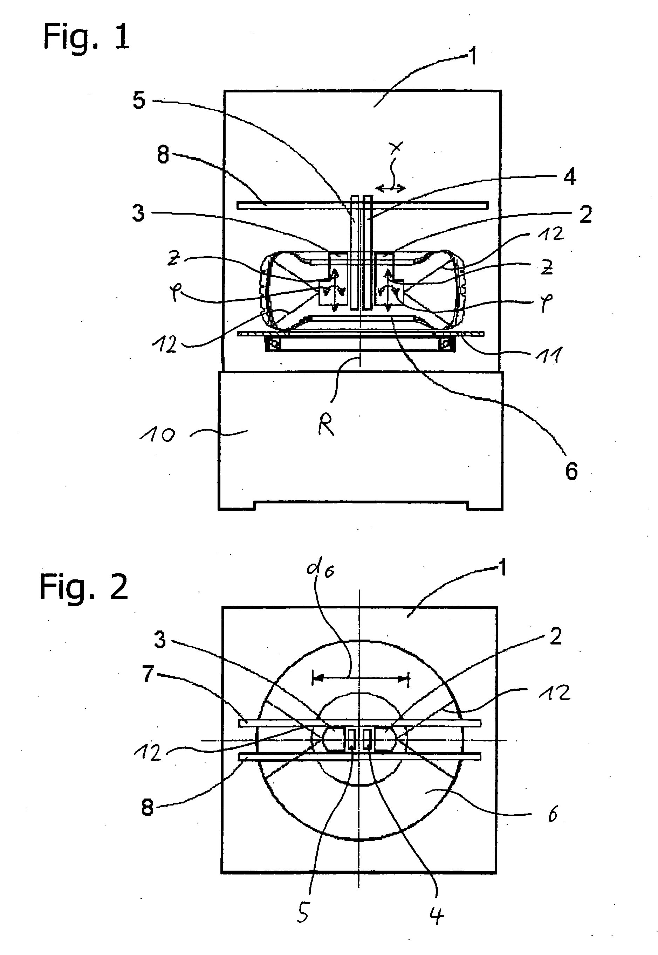

Die in den Fig. 1 und 2 dargestellte Vorrichtung zum Prüfen eines Reifens 6 weist eine als Haube ausgestaltete Druckkammer 1 auf, die auf einem Untergestell 10 angeordnet ist. Die Druckkammer 1 ist in vertikaler Richtung bewegbar gelagert, so dass ein in der Druckkammer 1 zu prüfender Reifen 6 durch Anheben der Druckkammer 1 beladen oder entladen werden kann. In der in Fig. 1 gezeigten geschlossenen Stellung liegt die Druckkammer 1 auf dem Untergestell 10 auf und ist gegenüber der Umgebung abgedichtet, so dass mittels einer nicht dargestellten Pumpe ein vorgegebener Druck in der Druckkammer 1 eingestellt werden kann. Der in der Druckkammer 1 herrschende Druck kann ein Überdruck oder ein Unterdruck sein. In der industriellen Praxis hat es sich als zweckmäßig erwiesen, als Referenzzustand den Atmosphärendruck zu wählen und als Messzustand einen Unterdruck vorzusehen, auf den die Druckkammer 1 evakuiert wird.

Das Untergestell 10 ist mit einem Drehteller 11 versehen, auf dem der Reifen 6 liegend gelagert ist. Auf Grund der liegenden Anordnung des Reifens 6 verläuft die axiale Richtung z des Reifens 6 vertikal und die radiale Richtung x des Reifens 6 horizontal. Der Drehteller 11 ermöglicht eine Rotation des Reifens 6 um eine sich in der axialen Richtung z erstreckende Rotationsachse R.

Wie die Fig. 1 und 2 ferner zu erkennen geben, ist in der Druckkammer 1 ein Positionierungsmittel angeordnet, das eine erste Verstelleinheit 4, eine zweite Verstelleinheit 5, eine dritte Verstelleinheit 7 und eine vierte Verstelleinheit 8 umfasst. Die Verstelleinheiten 4, 5, 7, 8 sind zum Beispiel jeweils als Linearführung oder Linearmotor ausgestaltet. Die Verstelleinheiten 4, 5 ermöglichen eine geradlinige Bewegung in der axialen Richtung z, wohingegen die Verstelleinheiten 7, 8 eine geradlinige Bewegung in der radialen Richtung x bewirken. Die Verstelleinheit 4 ist an die Verstelleinheit 7 gekoppelt, und die Verstelleinheit 5 ist an die Verstelleinheit 8 gekoppelt. Auf diese Weise lassen sich die Verstelleinheiten 4, 5 durch die Verstelleinheiten 7, 8 in der radialen Richtung x bewegen.

An den Verstelleinheiten 4, 5 ist jeweils ein Messkopf 2, 3 angeordnet. Die Messköpfe 2, 3, die um eine orthogonal zu der Rotationsachse R verlaufende Schwenkachse drehbar an den Verstelleinheiten 4, 5 angeordnet und damit zum Einstellen der gewünschten Beobachtungsrichtung in einer Schwenkrichtung ϕ schwenkbar sind, können eine Ausgestaltung haben, wie es aus der EP 1 014 036 B1 bekannt ist, um den Reifen 6 mittels eines interferometrischen Messverfahrens zu prüfen. Demnach können die Messköpfe 2, 3 ein Objektiv, das ein Gesichtsfeld 12 hat, eine Kamera, die mit einem Halbleitersensor, zum Beispiel einem CCD- oder CMOS-Sensor, versehen ist, eine Beleuchtungseinheit, die zum Beispiel durch eine Vielzahl an Laserdioden gebildet wird, und ein Shearingelement, das sich beispielsweise aus einem Strahlteiler, einem bewegbaren Spiegel und einem stationären Spiegel zusammensetzt, umfassen.

Um den Reifen 6 interferometrisch zu prüfen, wird der Reifen 6 mittels der kohärentes Licht emittierenden Beleuchtungseinheit beleuchtet. Üblicherweise wird zum Prüfen der inneren Umfangsfläche des Reifens 6 sowohl der Bereich des Gürtels des Reifens 6 als auch die sich im Übergang von der Lauffläche auf die Seitenwände befindende Schulter des Reifens 6 beleuchtet. Die Seitenwände des Reifens 6 werden im Allgemeinen von außen beleuchtet, können aber bei einer ausreichend großen Reifenbreite auch von innen beleuchtet werden. Die von der Oberfläche des Reifens 6 rückgestreuten Lichtbündel werden mittels des Objektivs aufgenommen und auf das Shearingelement abgebildet sowie mit Hilfe von diesem zur Interferenz gebracht. Die interferierenden Lichtbündel werden mittels der im Strahlengang des Shearingelements angeordneten Kamera als Interferogramm aufgenommen, um ein Interferogramm zu erzeugen. Die Messköpfe 2, 3 sind mit einer elektronischen Auswerteeinheit verbunden, welche die von der Kamera erfassten Interferogramme verarbeitet, um beispielsweise aus unterschiedlichen Zuständen des Reifens 6, die sich auf Grund einer Änderung des Drucks in der Druckkammer 1 ergeben, ein die Verformung an der Oberfläche des Reifens 6 anzeigendes Shearogramm zu erstellen.

Der Messkopf 2, 3 ist mittels der Verstelleinheiten 4, 7 in der axialen Richtung z und der radialen Richtung x verstellbar und kann auf diese Weise zwischen einer außerhalb des Reifens 6 befindlichen Parkposition und einer innerhalb des Reifens 6 befindlichen und in Fig. 1 zu erkennenden Beobachtungsposition bewegt werden. Der Messkopf 3 lässt sich mittels der Verstelleinheiten 5, 8 ebenfalls zwischen einer außerhalb des Reifens 6 befindlichen Parkposition und einer innerhalb des Reifens 6 befindlichen Beobachtungsposition bewegen. Die Verstelleinheiten 4, 5, 7, 8 können unabhängig voneinander gesteuert werden, so dass sich auch die Messköpfe 2, 3 unabhängig voneinander sowohl in der Parkposition als auch in der Beobachtungsposition positionieren lassen. Für die Steuerung der Verstelleinheiten 4, 5, 7, 8 findet eine Steuereinrichtung Anwendung, die in die elektronische Auswerteeinheit, mit der die Messköpfe 2, 3 verbunden sind, integriert sein kann. Die Steuereinrichtung weist einen Speicher auf, in den die Dimension des zu prüfenden Reifens 6, 9, insbesondere der Felgendurchmesser d₆, d₉, die Reifenbreite und die Reifenhöhe, abgelegt ist. In Abhängigkeit von der Dimension des Reifens 6, 9 wird die Anzahl der innerhalb des Reifens 6, 9 in einer Beobachtungsposition zu positionierenden Messköpfe 2, 3 automatisch von der Steuereinrichtung ausgewählt.

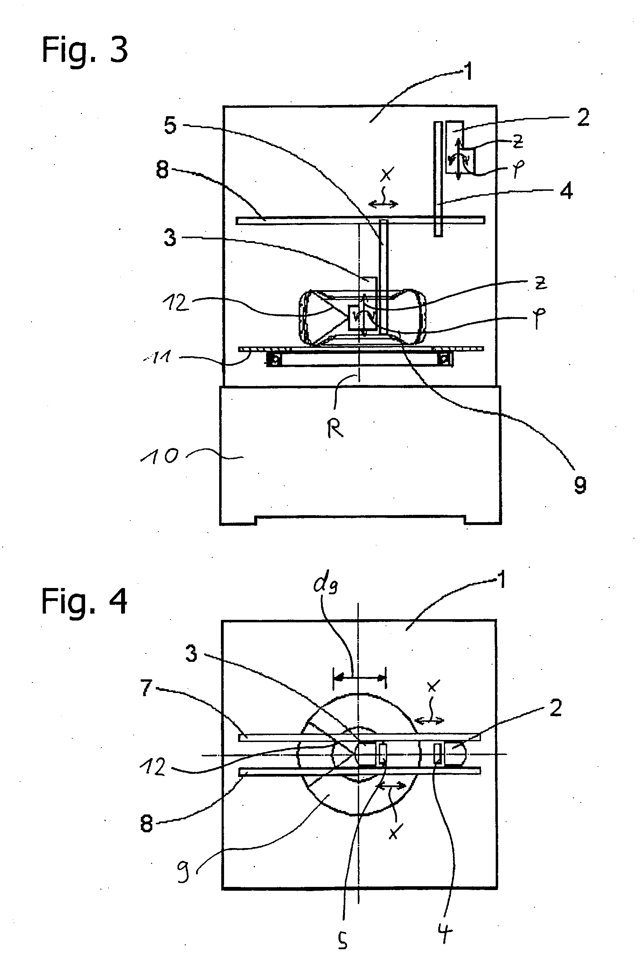

Der in den Fig. 1 und 2 gezeigte Reifen 6 verfügt über einen im Vergleich zu den Abmessungen der Messköpfe 2, 3, die vornehmlich durch das Shearingelement und die Kamera bestimmt werden, großen Felgendurchmesser d₆. Der zu prüfende Reifen 9, der in den Fig. 3 und 4 gezeigt ist, verfügt hingegen über einen vergleichsweise geringen Felgendurchmesser d₉. Der Felgendurchmesser d₆ des Reifens 6 ist ausreichend groß, um beide Messköpfe 2, 3 im Inneren des Reifens 6 mittels der Verstelleinheiten 4, 5, 7, 8 zu positionieren, so dass sich eine kurze Prüfzeit ergibt. Der Felgendurchmesser d₉ des Reifens 9 erlaubt dagegen nur einen der Messköpfe 2, 3 in eine sich innerhalb des Reifens befindlichen Beobachtungsposition zu positionieren. Aufgrund der unabhängigen Verstellbarkeit der Messköpfe 2, 3 ist es möglich, wahlweise entweder den Messkopf 2 oder, wie in Fig. 3 gezeigt, den Messkopf 3 ins Innere des Reifens 9 einzuführen, um die innerhalb des Reifens 9 befindliche Beobachtungsposition einzunehmen. Der andere Messkopf 2 bleibt in der außerhalb des Reifens 9 befindlichen Parkposition, so dass ein ungehindertes Manövrieren des Messkopfs 3 zum Einnehmen der Beobachtungsposition sichergestellt ist.

Die zuvor beschriebene Vorrichtung zum Prüfen eines Reifens 6, 9 zeichnet sich durch eine universelle Ausgestaltung aus, die es ermöglicht, Reifen 6, 9 unterschiedlicher Dimensionen zu prüfen. Grund hierfür ist in erster Linie die unabhängige Verstellbarkeit der Messköpfe 2, 3, die es zudem gestattet, Reifen 6 mit einem ausreichend großen Felgendurchmesser d₆ simultan durch mehrere Messköpfe 2, 3 zu prüfen, um eine kurze Prüfzeit zu gewährleisten. Nicht zuletzt trägt die Vorrichtung einer hohen Ausfallsicherheit Rechnung, da sich aufgrund der unabhängigen Verstellbarkeit der Messköpfe 2, 3 eine redundante Ausgestaltung ergibt.

### Bezugszeichenliste

- 1: Druckkammer
- 2: erster Messkopf
- 3: zweiter Messkopf
- 4: erste Verstelleinheit
- 5: zweite Verstelleinheit
- 6: Reifen mit großem Felgendurchmesser
- 7: dritte Verstelleinheit
- 8: vierte Verstelleinheit
- 9: Reifen mit kleinem Felgendurchmesser
- 10: Untergestell
- 11: Drehteller
- 12: Gesichtsfeld

- d₆: Felgendurchmesser
- d₉: Felgendurchmesser
- R: Rotationsachse
- ϕ: Schwenkrichtung
- x: radiale Richtung
- z: axiale Richtung

## Patentansprüche

1. Vorrichtung zum Prüfen eines Reifens (6, 9) mittels eines interferometrischen Messverfahrens, mit
einer Druckkammer (1), in welcher der Reifen (6, 9) einem vorgegebenen Druck aussetzbar ist;
wenigstens einem ersten Messkopf (2) und einem zweiten Messkopf (3), durch die der Reifen (6, 9) zum Erzeugen eines Messergebnisses abtastbar ist, und
einem Positionierungsmittel (4, 5, 7, 8), durch das der erste Messkopf (2) und der zweite Messkopf (3) zwischen einer außerhalb des Reifens (6, 9) befindlichen Parkposition und einer innerhalb des Reifens (6, 9) befindlichen Beobachtungsposition bewegbar sind;
wobei das Positionierungsmittel
eine erste Verstelleinheit (4), durch die der erste Messkopf (2) in einer axialen Richtung (z) bewegbar ist,
eine unabhängig von der ersten Verstelleinheit (4) steuerbare zweite Verstelleinheit (5), durch die der zweite Messkopf (3) in der axialen Richtung (z) bewegbar ist,
eine dritte Verstelleinheit (7), durch die der erste Messkopf (2) in einer radialen Richtung (x) bewegbar ist, und
eine unabhängig von der dritten Verstelleinheit (7) steuerbare vierte Verstelleinheit (8), durch die der zweite Messkopf (3) in der radialen Richtung (x) bewegbar ist, umfasst und
wobei der erste Messkopf (2) und der zweite Messkopf (3) durch die Verstelleinheiten (4, 5, 7, 8) unabhängig voneinander in der Parkposition und/oder der Beobachtungsposition positionierbar sind.

2. Vorrichtung nach Anspruch 1, **dadurch gekennzeichnet, dass** die erste Verstelleinheit (4) an die dritte Verstelleinheit (7) gekoppelt ist.

3. Vorrichtung nach Anspruch 1 oder 2, **dadurch gekennzeichnet, dass** die zweite Verstelleinheit (5) an die vierte Verstelleinheit (8) gekoppelt ist.

4. Vorrichtung nach einem der Ansprüche 1 bis 3, **dadurch gekennzeichnet, dass** die Verstelleinheiten (4, 5, 7, 8) als Linearführung oder Linearmotor ausgestaltet sind.

5. Vorrichtung nach einem der Ansprüche 1 bis 4, **dadurch gekennzeichnet, dass** die axiale Richtung (z) vertikal verläuft und die radiale Richtung (x) horizontal verläuft.

6. Vorrichtung nach einem der Ansprüche 1 bis 5, **dadurch gekennzeichnet, dass** der erste Messkopf (2) und/oder der zweite Messkopf (3) relativ zu dem Reifen (6, 9) um eine sich in der axialen Richtung (z) erstreckende Rotationsachse (R) drehbar sind.

7. Vorrichtung nach Anspruch 6, **dadurch gekennzeichnet, dass** der erste Messkopf (2) und/oder der zweite Messkopf (3) um eine orthogonal zu der Rotationsachse (R) verlaufende Schwenkachse drehbar sind.

8. Vorrichtung nach einem der Ansprüche 1 bis 7, **gekennzeichnet durch** ein Untergestell (10), auf dem die Druckkammer (1) angeordnet ist.

9. Vorrichtung nach Anspruch 8, **dadurch gekennzeichnet, dass** der Reifen (6, 9) um die Rotationsachse (R) drehbar auf dem Untergestell (6) lagerbar ist.

10. Vorrichtung nach einem der Ansprüche 1 bis 9, **dadurch gekennzeichnet, dass** der erste Messkopf (2) und/oder der zweite Messkopf (3) eine Beleuchtungseinheit, durch welche der Reifen (6, 9) beleuchtet wird, ein Shearingelement, durch das die von dem Reifen (6, 9) rückgestreuten Lichtbündel zur Interferenz gebracht werden, und einen elektronischen Bildsensor, der im Strahlengang des Shearingelements angeordnet ist und die interferierenden Lichtbündel aufnimmt, umfassen.

11. Verfahren zum Prüfen eines Reifens (6, 9) mittels eines interferometrischen Messverfahrens, mit folgenden Verfahrensschritten:
a) ein zu prüfender Reifen (6, 9) wird in einer Prüfvorrichtung angeordnet, die eine Druckkammer (1), ein Positionierungsmittel (4, 5, 7, 8) sowie wenigstens einen ersten Messkopf (2) und einen zweiten Messkopf (3) aufweist;
b) der Reifen (6, 9) wird in der Druckkammer (1) einem vorgegebenen Druck ausgesetzt;
c) der erste Messkopf (2) wird durch das Positionierungsmittel (4, 7) von einer außerhalb des Reifens (6, 9) befindlichen Parkposition in eine innerhalb des Reifens (6, 9) befindliche Beobachtungsposition bewegt;
d) in Abhängigkeit von der Dimension (d₆, d₉) des Reifens (6, 9) wird der zweite Messkopf (3) durch das Positionierungsmittel (5, 8) unabhängig von dem ersten Messkopf (2) von einer außerhalb des Reifens (6, 9) befindlichen Parkposition in eine innerhalb des Reifens (6, 9) befindliche Beobachtungsposition bewegt und
e) der Reifen (6, 9) wird entweder von dem ersten Messkopf (2) oder simultan von dem ersten Messkopf (2) und dem zweiten Messkopf (3) abgetastet.

12. Verfahren nach Anspruch 11, **dadurch gekennzeichnet, dass** in Abhängigkeit von der Dimension (d₆, d₉) des Reifens (6, 9) die Anzahl der in einer innerhalb des Reifens (6, 9) befindlichen Beobachtungsposition zu positionierenden Messköpfe (2, 3) von einer Steuereinrichtung automatisch ausgewählt wird.

13. Verfahren nach Anspruch 11 oder 12, **dadurch gekennzeichnet, dass** der Reifen (6, 9) um eine sich in axialer Richtung (z) erstreckende Rotationsachse (R) gedreht wird.

14. Verfahren nach einem der Ansprüche 11 bis 13, **dadurch gekennzeichnet, dass** der erste Messkopf (2) und der zweite Messkopf (3) eine sich aufgrund einer Änderung des Drucks in der Druckkammer (1) ergebende Verformung des Reifens (6, 9) interferometrisch erfassen.

## Claims

1. A device for testing a tyre (6, 9) by means of an interferometric scanning method, comprising
a pressure chamber (1) in which the tyre (6, 9) is exposable to a predetermined pressure;
at least a first scanning head (2) and a second scanning head (3) by which the tyre (6, 9) is scannable for generating a measurement result, and
a positioning means (4, 5, 7, 8) by which the first scanning head (2) and the second scanning head (3) are movable between a parking position located outside of the tyre (6, 9) and a viewing position located within the tyre (6, 9),
wherein the positioning means comprises
a first positioner (4) by which the first scanning head (2) is movable in the axial direction (z),
a second positioner (5) independently controllable of the first positioner (4) by which the second scanning head (3) is movable in the axial direction (z),
a third positioner (7) by which the first scanning head (2) is movable in the radial direction (x), and
a fourth positioner (8) independently controllable of the third positioner (7) by which the second scanning head (3) is movable in the radial direction (x), and
the first scanning head (2) and second scanning head (3) being independently positionable from each other by the positioning means (4, 5, 7, 8) in the parking position and/or viewing position.

2. The device according to claim 1, **characterized in that** the first positioner (4) is coupled to the third positioner (7).

3. The device according to claims 1 or 2, **characterized in that** the second positioner (5) is coupled to the fourth positioner (8).

4. The device according to any of the claims 1 to 3, **characterized in that** the positioning means (4, 5, 7, 8) are configured as a linear guide or linear motor.

5. The device according to any of the claims 1 to 4, **characterized in that** the axial direction (z) extends vertically and the radial direction (x) extends horizontally.

6. The device according to any of the claims 1 to 5, **characterized in that** the first scanning head (2) and/or the second scanning head (3) are rotatable relative to the tyre (6, 9) about an axis of rotation (R) extending in the axial direction (z).

7. The device according to claim 6, **characterized in that** the first scanning head (2) and/or the second scanning head (3) are rotatable about a pivoting axis oriented orthogonal to the axis of rotation (R).

8. The device according to any of the claims 1 to 7, **characterized by** a baseframe (10) on which the pressure chamber (1) is arranged.

9. The device according to claim 8, **characterized in that** the tyre (6, 9) is rotatably mounted about the axis of rotation (R) on the baseframe (6).

10. The device according to any of the claims 1 to 9, **characterized in that** the first scanning head (2) and/or the second scanning head (3) comprise an illuminator, by which the tyre (6, 9) is illuminated, a shearing element for producing interference with the light beams reflected by the tyre (6, 9), and an electronic image sensor disposed in the beam path of the shearing element to receive the interference light beams.

11. A method for testing a tyre (6, 9) by means of an interferometric scanning method, comprising the following steps:
a) locating a tyre (6, 9) to be tested in a testing device including a pressure chamber (1), a positioning means (4, 5, 7, 8), and at least a first scanning head (2) and a second scanning head (3);
b) exposing the tyre (6, 9) to a predetermined pressure in the pressure chamber (1);
c) moving the first scanning head (2) by the positioning means from a parking position outside of the tyre (6, 9) into a viewing position within the tyre (6, 9);
d) moving, as a function of the dimension (d₆, dg) of the tyre (6, 9), the second scanning head (3) by the positioning means (5, 8) independently of the first scanning head (2) from a parking position outside of the tyre (6, 9) into a viewing position within the tyre (6, 9) and
e) scanning the tyre (6, 9) either by the first scanning head (2) or simultaneously by the first scanning head (2) and second scanning head (3).

12. The method according to claim 11, **characterized in that**, as a function of the dimension (d₆, d₉) of the tyre (6, 9), the number of scanning heads (2, 3) to be positioned in a viewing position located within the tyre (6, 9) is automatically selected by a controller.

13. The method according to claim 11 or 12, **characterized in that** the tyre (6, 9) is rotated about an axis of rotation (R) extending in the axial direction (z).

14. The method according to one of the claims 11 to 13, **characterized in that** the first scanning head (2) and the second scanning head (3) interferometrically map a deformation of the tyre (6, 9) resulting from a change in pressure in the pressure chamber (1).

## Revendications

1. Dispositif pour contrôler un pneumatique (6, 9) au moyen d'un procédé de mesure interférométrique, comprenant
une chambre à pression (1) dans laquelle le pneumatique (6, 9) peut être exposé à une pression prédéterminée ;
au moins une première tête de mesure (2) et une seconde tête de mesure (3) au moyen desquelles le pneumatique (6, 9) peut être palpé pour engendrer un résultat de mesure, et
un moyen de positionnement (4, 5, 7, 8), au moyen duquel la première tête de mesure (2) et la seconde tête de mesure (3) sont déplaçables entre une position de rangement qui se trouve à l'extérieur du pneumatique (6, 9), et une position d'observation qui se trouve à l'intérieur du pneumatique (6, 9) ;
dans lequel le moyen de positionnement comprend
une première unité de réglage (4) au moyen de laquelle la première tête de mesure (2) est déplaçable dans une direction axiale (z),
une seconde unité de réglage (5), susceptible d'être commandée indépendamment de la première unité de réglage (4), au moyen de laquelle la seconde tête de mesure (3) est déplaçable dans la direction axiale (z),
une troisième unité de réglage (7) au moyen de laquelle la première tête de mesure (2) est déplaçable dans une direction radiale (x), et
une quatrième unité de réglage (8), commandée indépendamment de la troisième unité de réglage (7), au moyen de laquelle la seconde tête de mesure (3) est déplaçable en direction radiale (x), et
dans lequel la première tête de mesure (2) et la seconde tête de mesure (3) sont susceptibles d'être positionnées par les unités de réglage (4, 5, 7, 8) indépendamment l'une de l'autre dans la position de rangement et/ou dans la position d'observation.

2. Dispositif selon la revendication 1, **caractérisé en ce que** la première unité de réglage (4) est couplée à la troisième unité de réglage (7).

3. Dispositif selon la revendication 1 ou 2, **caractérisé en ce que** la seconde unité de réglage (5) est couplée à la troisième unité de réglage (7).

4. Dispositif selon l'une des revendications 1 à 3, **caractérisé en ce que** les unités de réglage (4, 5, 7, 8) sont conçues sous forme de guidages linéaires ou de moteurs linéaires.

5. Dispositif selon l'une des revendications 1 à 4, **caractérisé en ce que** la direction axiale (z) s'étend verticalement et la direction radiale (x) s'étend horizontalement.

6. Dispositif selon l'une des revendications 1 à 5, **caractérisé en ce que** la première tête de mesure (2) et/ou la seconde tête de mesure (3) peuvent être mises en rotation par rapport au pneumatique (6, 9) autour d'un axe de rotation (R) s'étendant en direction axiale (z).

7. Dispositif selon la revendication 6, **caractérisé en ce que** la première tête de mesure (2) et/ou la seconde tête de mesure (3) sont capables de tourner autour d'un axe de pivotement s'étendant perpendiculairement à l'axe de rotation (R).

8. Dispositif selon l'une des revendications 1 à 7, **caractérisé par** un bâti inférieur (10) sur lequel est agencée la chambre de pression (1).

9. Dispositif selon la revendication 8, **caractérisé en ce que** le pneumatique (6, 9) peut être entreposé sur le bâti inférieur (6) de manière rotative autour de l'axe de rotation (R).

10. Dispositif selon l'une des revendications 1 à 9, **caractérisé en ce que** la première tête de mesure (2) et/ou la seconde tête de mesure (3) comprennent une unité d'éclairage au moyen de laquelle le pneumatique (6, 9) est éclairé, un élément de scission, au moyen duquel le faisceau de lumière diffusée en retour par le pneumatique (6, 9) est amené en interférence, et un capteur d'images électronique, qui est agencé dans le trajet des rayons de l'élément de scission et qui reçoit le faisceau de lumière en interférence.

11. Procédé pour contrôler un pneumatique (6, 9) au moyen d'un procédé de mesure interférométrique, comprenant les étapes de procédé suivantes :
a) on agence un pneumatique à contrôler (6, 9), dans un dispositif de contrôle qui comprend une chambre à pression (1), un moyen de positionnement (4, 5, 7, 8), ainsi qu'au moins une tête de mesure (2) et une seconde tête de mesure (3) ;
b) le pneumatique (6, 9) est exposé à une pression prédéterminée dans la chambre de pression (1) ;
c) la première tête de mesure (2) est déplacée par le moyen de positionnement (4, 7) depuis une position de rangement qui se trouve à l'extérieur du pneumatique (6, 9) jusque dans une position d'observation qui se trouve à l'intérieur du pneumatique (6, 9) ;
d) en fonction de la dimension (d₆, d₉) du pneumatique (6, 9), la seconde tête de mesure (3) est déplacée par le moyen de positionnement (5, 8) indépendamment de la première tête de mesure (2) depuis une position de rangement qui se trouve à l'extérieur du pneumatique (6, 9) jusque dans une position d'observation qui se trouve à l'intérieur du pneumatique (6, 9), et
e) le pneumatique (6, 9) est balayé soit par la première tête de mesure (2), soit simultanément par la première tête de mesure (2) et par la seconde tête de mesure (3).

12. Procédé selon la revendication 11, **caractérisé en ce que**, en fonction de la dimension (d₆, d₉) du pneumatique (6, 9), le nombre des têtes de mesure (2, 3) à positionner à une position d'observation qui se trouve à l'intérieur du pneumatique (6, 9) est choisi automatiquement par un système de commande.

13. Procédé selon la revendication 11 ou 12, **caractérisé en ce que** le pneumatique (6, 9) est tourné autour d'un axe de rotation (R) qui s'étend en direction axiale (z).

14. Procédé selon l'une des revendications 11 à 13, **caractérisé en ce que** la première tête de mesure (2) et la seconde tête de mesure (3) détectent par interférométrie une déformation du pneumatique (6, 9) qui résulte en raison d'une modification de la pression dans la chambre à pression (1).
